# EUROPEAN PATENT SPECIFICATION

(11) **EP 2 990 557 B1**
(45) Date of publication and mention of the grant of the patent: **18.07.2018**
(21) Application number: 14425110.5
(22) Date of filing: 29.08.2014
(51) Int. Cl.: E04B 1/86, E04B 1/84, B32B 7/12, B32B 9/02, B32B 21/08, B32B 27/12, B32B 27/36, C04B 26/00, E04B 1/88, C04B 111/00, C04B 111/28, C04B 111/52, B32B 27/08

(54) **Panel for walls, ceilings, false ceilings, floor surfaces, furnishing elements and the like**
Paneele für Wände, abgehängte Decke, Fußbodenoberflächen, Einrichtungselemente und dergleichen
Panneau pour parois, plafonds, faux plafonds, surfaces de plancher, éléments de meubles et similaires

(43) Date of publication of application: 02.03.2016
(73) Proprietor: Mascagni S.P.A., 40033 Casalecchio di Reno, BO (IT)
(72) Inventor: Mugnoz, Antonio, 06039 Trevi PG (IT)
(74) Representative: Modiano, Micaela Nadia

(56) References cited:
- EP-A1- 2 236 286
- EP-A2- 1 245 749
- WO-A1-2012/001399
- CA-A1- 2 780 416
- DE-U1-202007 017 699
- JP-A- 2001 081 878

## Description

The present invention relates to a panel for walls, ceilings, false ceilings, floor surfaces, furnishing elements and the like.

As is known, noise pollution is generally caused by excessive exposure to sounds and noise of such high intensity as to cause annoyance or disturb rest and human activity, even representing a danger to human health.

In fact, over time noise pollution can cause people psychological pressure and stress problems.

Such phenomenon can be found both in outside environments owing to construction sites, airports, motorways, motor racing tracks, and also in indoor environments, in particular in public environments such as offices, bars, restaurants, swimming pools, gyms and the like.

It is known that in order to be able to limit noise pollution one can soundproof the buildings with the use of particular construction materials and techniques.

Frequently, use is made of noise barriers, generally constituted by walls, panels and the like, of limited height, which are provided with sound insulation or sound absorption capacity, and are arranged between the source of the noise and the affected area.

These are passive methods of reducing noise, and are geared to present obstacles to the propagation of noise.

One of the principal drawbacks of noise barriers is represented by their appearance, which in the majority of cases is unpleasant or in any case difficult to adapt to the requirements of architects, designers and furnishers, who need to design an environment following a certain style, aesthetic requirements or tastes of the purchaser.

In fact, in the provision of such barriers there is an extremely low level of customization of materials, colors, surfaces and shapes.

DE 20 2007 017699 U1 discloses a wall partition element (18) comprising a central sound-absorption element (38) made of polyester wool, sandwiched between a first outer plate (30) having a first nonwoven layer (34) glued to the innerside thereof, and a second outer plate (32) having a second nonwoven layer (36) glued to the innerside thereof. The outer plates (30,32) are thin metal microbore plates of about 1mm thickness, provided with holes having diameters of about 1.1mm with a mutual distance of about 2mm. Due to its perforation, the outer plates (30,32) on the one hand allows the penetration of sound waves into the interior of the wall partition element and also provides an attractive design so that additional decorative layers can be dispensed with on the outsides of the two outer plates (30,32) which are designed as micromechanical plates. Low frequency sound waves (for example, in the range of about 500 Hz) are absorbed within the sound-absorption element (38) and the higher frequency sound waves (for example, in the range of about 1,000 to 2,000 Hz) are absorbed between the two outer plates (30,32). In an alternative embodiment, the second outer panel (32) is simply formed from a panel of wood, metal or plastic and optionally provided with a decorative layer.

The aim of the present invention is to solve the above mentioned drawbacks, by providing a panel for walls, ceilings, false ceilings, floor surfaces, furnishing elements and the like which has a high degree of customization.

Within this aim, an object of the invention is to provide a panel for walls, ceilings, false ceilings, floor surfaces, furnishing elements and the like which makes it possible to optimize the acoustics in the environments in which it is installed.

Another object of the present invention is to provide a panel for walls, ceilings, false ceilings, floor surfaces, furnishing elements and the like which makes it possible to reduce noise pollution in the environments in which it is installed.

Another object of the present invention is to provide a panel for walls, ceilings, false ceilings, floor surfaces, furnishing elements and the like which is low cost, easily and practically implemented, and safe in use.

In accordance with the invention, there is provided a panel as defined in the appended claims.

Further characteristics and advantages of the invention will become better apparent from the description of a preferred, but not exclusive, embodiment of the panel for walls, ceilings, false ceilings, floor surfaces, furnishing elements and the like, according to the invention, which is illustrated by way of non-limiting example in the accompanying drawings wherein:

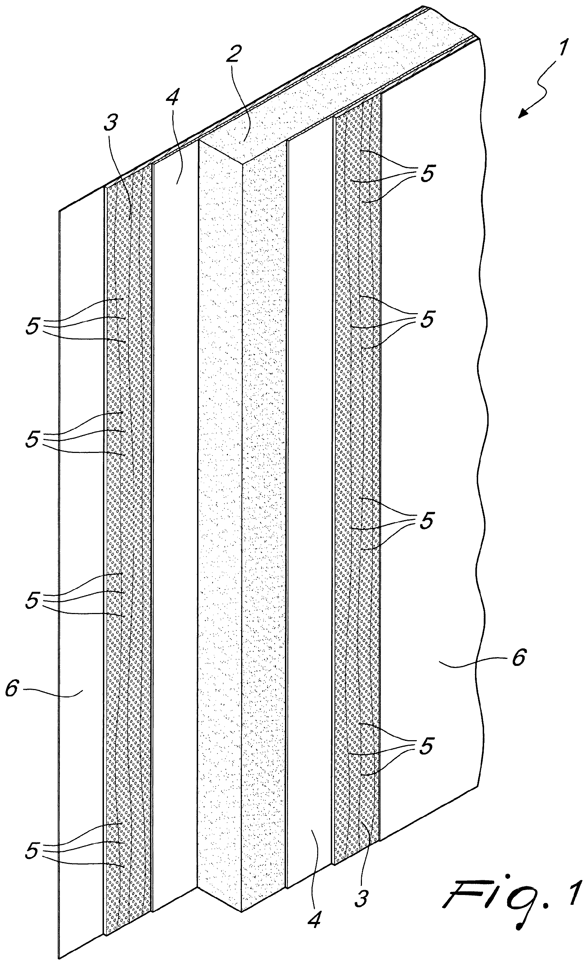

Figure 1 is a partially sectional perspective view of the panel according to the invention;

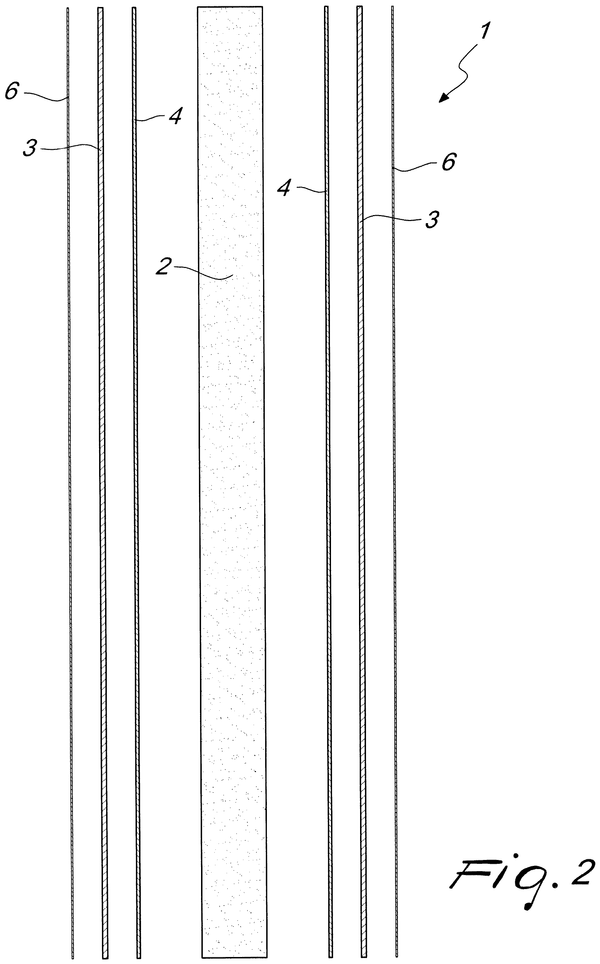

Figure 2 is an exploded front elevation view of the panel according to the invention according to a possible embodiment;
Figure 3 is a partially sectional perspective view of the panel according to the invention, according to a different possible embodiment.

With reference to the figures, the reference numeral 1 generally designates a panel for walls, ceilings, false ceilings, floor surfaces, furnishing elements and the like.

The panel 1 comprises at least one continuous insulating layer 2 of polymeric material coupled stably to at least one sheet 3 of a material preferably selected from among wood, polymeric material, fabric, microfiber, hide and the like.

The appropriate combination of the materials that constitute the continuous layer 2 and the sheet 3, by taking advantage of different mechanisms, enables an optimal absorption of sound energy.

Furthermore, the presence of the sheet 3 renders the layer 2 externally invisible, thus making possible a high degree of customization of the panel 1.

In fact, the possibility of making the sheet 3 from materials of different types, without interfering with the sound absorption capacities of the panel 1, makes it possible to meet the design requirements of designers, architects, furnishers and the like.

In particular, the continuous layer 2 can be constituted by polyester for thermal and/or acoustic insulation.

Polyester is particularly suitable for this embodiment, in that it is a material with an open porous structure that ensures an optimal dissipation of sound energy.

In fact, in porous materials, sound absorption is provided by viscous dissipation of the mechanical energy of the sound wave as heat, i.e. by phenomena of friction in the porosity of the material.

According to a solution of particular utility and practicality, shown in the accompanying figures, a film 4 of adhesive material can be interposed between the continuous layer 2 and the sheet 3.

The sheet 3 can thus be glued to the layer 2, thus taking on the same shape as the layer 2 proper.

The at least one sheet 3 can have a plurality of through openings 5 that are distributed in order to increase the capacity of the sheet 3 for the transmission of sound waves to the continuous layer 2.

The sound energy is thus further dissipated by a phenomenon of damping of the oscillation of the air mass, which is partially confined in the opening 5 and is made to vibrate by the sound waves striking the opening 5 proper.

The presence of the sheet 3 thus makes it possible to boost the sound-absorption properties of the continuous layer 2.

The openings 5 can be mutually arranged on the sheet 3 according to a plurality of different preset configurations.

The openings 5 can have a diameter of size comprised between 0.001 mm and 100 mm.

The sheet 3 can be perforated by defining openings 5 which can have different diameters and configurations according to the requirements of architects, designers, furnishers and the like.

The possibility is not excluded of providing openings 5 of different diameters on the same panel 1; it is in fact possible to achieve an absorption distributed over a broader frequency range, by using panels with openings 5 of different diameters.

The panel 1 can have a second, continuous sheet 6 coupled to the first, perforated sheet 3, covering it in order to prevent its openings 5 from being seen.

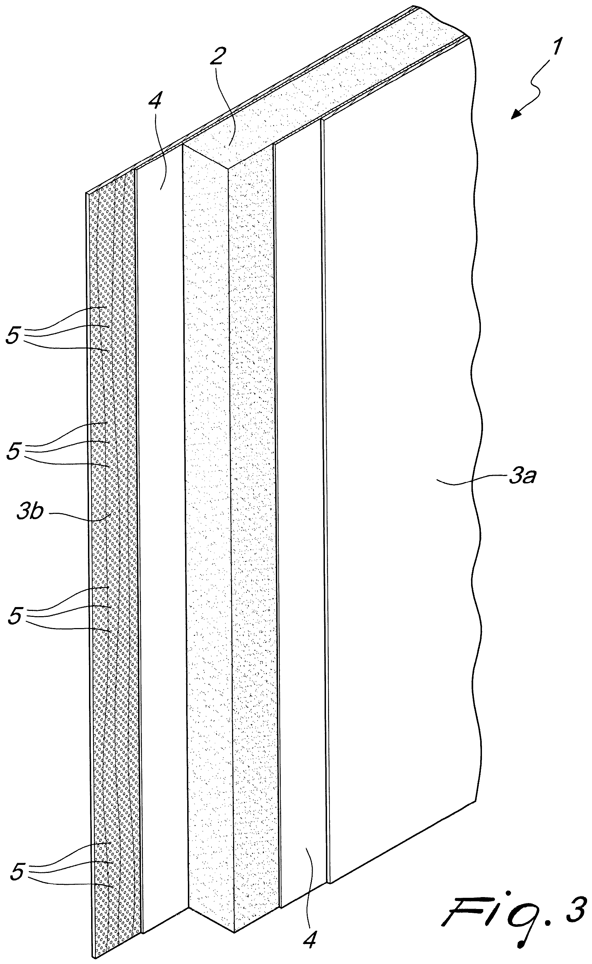

The continuous layer 2, as illustrated in Figure 3, can be interposed between two sheets 3a and 3b, with optional interposition of the film of adhesive material 4, one 3a of the sheets being of fabric, the other 3b of the sheets being of wood.

Thus it is possible to provide the sheet 3 using materials of different types such as wood or fabric, ductile materials with high aesthetic impact.

The panel 1 is thus extremely light, space-saving and adaptable to all types of environments, both public environments like bars, restaurants, cinemas, theaters, offices, airports, shopping centers, swimming pools, gyms, and also private and residential environments.

The continuous layer 2 can have a density that is preferably selected between 5 kg/m3 and 120 kg/m3.

The extent of the absorption depends in fact on the structure and on the density of the layer 2 used for providing the panel 1.

A higher density of the layer 2 makes it possible to provide panels 1 that are substantially rigid, while a lower density makes it possible to obtain a panel 1 that can be easily folded in order to adapt it to the various different requirements of architects, designers, furnishers and the like.

The continuous layer 2 can have a thickness that is preferably selected between 1 mm and 200 mm.

The extent of the absorption also depends on the thickness of the layer 2 used to provide the panel 1; greater thickness implies greater capacity to absorb sound energy.

The sheet 3 can have a thickness that is preferably selected between 0.1 mm and 10 mm.

The extent of the absorption also depends on the type of material used to provide the sheet 3 and in particular on its thickness; greater thickness implies a greater capacity to absorb sound energy.

The panel 1 is substantially modular, and can be provided according to different shapes and sizes, according to requirements.

Furthermore, it can be coupled to other panels 1, in order to provide different types of products, such as walls, partitions, ceilings, false ceilings, floor surfaces, furnishing elements and the like.

The possibility is not excluded of using the panels 1, according to the invention, in order to cover the walls, for example, of a recording studio, or of a cinema or of a theater, where acoustics plays a critical role.

Effectively, the panel 1 for walls, ceilings, false ceilings, floor surfaces, furnishing elements and the like enables a high degree of customization and therefore makes it possible to meet the various and particular requirements of architects, designers, furnishers and the like.

Advantageously, the panel 1 for walls, ceilings, false ceilings, floor surfaces, furnishing elements and the like makes it possible to optimize the acoustics in the environments in which it is installed.

Conveniently, the panel 1, according to the invention, makes it possible to reduce noise pollution in the environments in which it is installed.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

## Claims

1. A panel for walls, ceilings, false ceilings, floor surfaces, furnishing elements and the like, comprising a continuous insulating layer (2) of polyester for thermal and/or acoustic insulation, which is coupled stably to at least one sheet (3), a film of adhesive material (4) being interposed between said continuous layer (2) and said sheet (3), at least one sheet (3) having a plurality of through openings (5) that are distributed in order to increase the capacity of said sheet (3) for the transmission of sound waves to said continuous layer (2), said openings (5) having a diameter of size comprised between 0.001 mm and 100 mm, the panel being **characterized in that** said sheet (3) is made of a material selected from among wood, polymeric material, fabric, microfiber, and hide, said continuous layer (2) has a density that is selected between 5 kg/m3 and 120 kg/m3, said continuous layer (2) has a thickness that is selected between 1 mm and 200 mm, and said sheet (3) has a thickness that is selected between 0.1 mm and 10 mm.

2. The panel according to claim 1, **characterized in that** said openings (5) are mutually arranged on said sheet (3) according to a plurality of different preset configurations.

3. The panel according to claim 1, **characterized in that** said continuous layer (2) is interposed between two sheets (3a and 3b), with optional interposition of the film of adhesive material (4), one of said sheets (3a) being of fabric, the other of said sheets (3b) being of wood.

## Patentansprüche

1. Ein Paneel für Wände, Decken, eingeschobene Decken, Fußbodenoberflächen, Einrichtungselemente und dergleichen, das eine durchgehende Isolierschicht (2) aus Polyester zur thermischen und/oder akustischen Isolierung umfasst, die fest mit mindestens einer Lage (3) gekoppelt ist, wobei eine Schicht aus Klebematerial (4) zwischen der durchgehenden Schicht (2) und der Lage (3) angeordnet ist, wobei mindestens eine Lage (3) eine Vielzahl von Durchgangsöffnungen (5) hat, die verteilt sind, um die Kapazität der Lage (3) für die Übertragung von Schallwellen an die durchgehende Schicht (2) zu erhöhen, wobei die Öffnungen (5) einen Durchmesser mit einer Größe haben, die zwischen 0,001 mm und 100 mm liegt; wobei das Paneel **dadurch gekennzeichnet ist, dass** die Lage (3) aus einem Material besteht, das gewählt ist aus Holz, Polymermaterial, Textil, Mikrofaser und Tierhaut; die durchgehende Schicht (2) hat eine Dichte, die gewählt ist zwischen 5kg/m3 und 120 kg/m3, die durchgehende Schicht (2) hat eine Dicke, die gewählt ist zwischen 1 mm und 200 mm, und die Lage (3) hat eine Dicke, die gewählt ist zwischen 0,1 mm und 10 mm.

2. Das Paneel gemäß Anspruch 1, **dadurch gekennzeichnet, dass** die Öffnungen (5) auf der Lage (3) in einer Vielzahl verschiedener vordefinierter Konfigurationen zueinander angeordnet sind.

3. Das Paneel gemäß Anspruch 1, **dadurch gekennzeichnet, dass** die durchgehende Schicht (2) zwischen zwei Lagen (3a und 3b) angeordnet ist, mit optionaler Anordnung der Schicht aus Klebematerial (4) dazwischen, wobei eine der Lagen (3a) aus Textil besteht und die andere der Lagen (3b) aus Holz besteht.

## Revendications

1. Panneau pour murs, plafonds, faux plafonds, surfaces de plancher, éléments d'ameublement et similaires, comprenant une couche isolante continue (2) en polyester pour l'isolation thermique et/ou acoustique, qui est accouplée de manière stable à au moins une feuille (3), un film de matériau adhésif (4) étant intercalé entre ladite couche continue (2) et ladite feuille (3), au moins une feuille (3) comportant une pluralité d'ouvertures débouchantes (5) qui sont réparties de façon à augmenter la capacité de ladite feuille (3) à transmettre les ondes sonores à ladite couche continue (2), lesdites ouvertures (5) ayant un diamètre dont la taille est comprise entre 0,001 mm et 100 mm, le panneau étant **caractérisé en ce que** ladite feuille (3) est faite d'un matériau choisi parmi le bois, un matériau polymère, une étoffe, une microfibre et du cuir, ladite couche continue (2) a une masse volumique qui est choisie entre 5 kg/m3 et 120 kg/m3, ladite couche continue (2) a une épaisseur qui est choisie entre 1 mm et 200 mm, et ladite feuille (3) a une épaisseur qui est choisie entre 0,1 mm et 10 mm.

2. Panneau selon la revendication 1, **caractérisé en ce que** lesdites ouvertures (5) sont disposées mutuellement sur ladite feuille (3) selon une pluralité de configurations préétablies différentes.

3. Panneau selon la revendication 1, **caractérisé en ce que** ladite couche continue (2) est intercalée entre deux feuilles (3a et 3b), avec l'ajout optionnel du film de matériau adhésif (4), l'une desdites feuilles (3a) étant faite d'une étoffe, l'autre desdites feuilles (3b) étant en bois.
